# EUROPEAN PATENT APPLICATION

(11) **EP 4 815 345 A1**
(43) Date of publication of application: **30.09.2026**
(21) Application number: 25382280.3
(22) Date of filing: 24.03.2025
(51) Int. Cl.: H04B 17/21, G01S 7/40, G01S 13/74

(54) **SINGLE-CHANNEL APPARATUS AND METHOD FOR NOISE REDUCTION IN SPECTRAL ESTIMATION**

(71) Applicant: Consejo Superior de Investigaciones Cientificas, 28006 Madrid (ES)
(72) Inventor: RIBÓ VEDRILLA, Serni, 28006 MADRID (ES); CANALDA SABATÉ, Xavier Joan, 28006 MADRID (ES)
(74) Representative: Herrero & Asociados, S.L.

(57) **Abstract**

A single-channel apparatus (100) implementing a method for reducing noise in spectral estimations comprises an input signal port (111) for receiving an input signal (10) that contains both direct and reflected components. A calibration switch (112) alternates the signal path between a calibration load (118), which isolates the system for measuring internal noise, and the input signal (10) for signal acquisition. These signals are processed through a single receiver chain (119) into a digital signal processor (120) which implements noise-reduction by processing the calibration and signal acquisition measurements to compute the respective autocorrelation functions, their Fourier transforms and estimations of the power spectral densities, to compute a cleaned autocorrelation function, and deliver an output (330) as spectral estimations with reduced noise. This apparatus is configured to achieve accurate spectral analysis by leveraging self-calibration, simplifying design and improving sensitivity in different applications. For example, the DSP (120) can perform a reflectometry-specific process which uses the cleaned autocorrelation function to estimate a reflection coefficient.

## Description

### Field of the invention

The present invention relates to the field of signal measurement and analysis, particularly in the context of spectral estimation, relative power measurement, and reflection coefficient measurement of electromagnetic signals. The invention finds applications across diverse fields, including remote sensing, passive microwave reflectometry, laboratory and scientific instrumentation, military and security systems, and radiofrequency spectrum management. Specifically, it pertains to systems that analyze signals reflected from surfaces or objects by processing signals from external transmitters, commonly known as "sources of opportunity," to obtain relevant measurements without the need for dedicated signal sources.

More particularly, the present invention refers to a method and apparatus for reducing noise in spectral measurements and so improving the accuracy of relative power and reflection coefficient measurements for electromagnetic signals.

### Background of the invention

Passive reflectometry using sources of opportunity is a remote sensing concept where an independent transmitter sends a signal received by a remote receiver. This signal travels to the receiver through both a direct path and a reflected path, typically off surfaces such as the ground or sea. By processing these received signals, various characteristics of the reflecting surface can be derived. When the signals used are satellite radio navigation signals, this approach is called Global Navigation Satellite System Reflectometry (GNSS-R). Given that GNSS (Global Navigation Satellite System) signals are well-characterized, signal processing methods similar to those used in GNSS positioning can be applied, where the received signal is cross-correlated with a known model. The resulting correlation waveform allows estimation of both the delay and distortion of the reflected signal.

For GNSS-R applications, distinguishing the reflected signal power from the direct one is essential for measuring properties such as the sea surface reflection coefficient. The CYGNSS mission (Cyclone Global Navigation Satellite System) by NASA, for instance, leverages this method with GNSS-R-equipped satellites in low Earth orbit (LEO) to estimate ocean wind speeds by analyzing sea surface roughness, which correlates with wind intensity. This data enhances weather predictions for cyclone behaviour near coastlines. To achieve precise estimates, calibration systems are required to counteract potential gain discrepancies between the receiver channels used for the direct and reflected signals.

Beyond GNSS, other signals of opportunity can be used, including digital satellite TV signals from geostationary satellites with shorter wavelengths and communication satellite signals with longer wavelengths. Each frequency band has unique benefits. For instance, longer wavelengths penetrate deeper into soil, making them ideal for assessing root-zone soil moisture. NASA's SNOOPI mission, launched in 2024, is an in-orbit technology demonstrator focused on passive reflectometry using P-band signals (240-380 MHz), which aims to measure soil moisture at root-zone depths, leveraging the deep penetration capability of longer wavelengths to improve agricultural and environmental monitoring.

Existing solutions in the state of the art, such as those disclosed in US 2022/0350031 A1 and US 11828715 B2, involve reflectometry configurations that rely on specific calibration techniques. However, these approaches generally rely on traditional interference patterns obtained from long-term satellite movement observations or assume GNSS signal properties. For example, US 2022/0350031 A1 proposes calibration methods based on interference patterns obtained over extended observation periods, where the receiver records variations in the signal due to satellite orbit changes. Similarly, US 11828715 B2 utilizes an interference approach based on single-antenna configurations, with calibration relying on interference effects between direct and reflected signals. More particularly:
US 2022/0350031 A1 discloses a transceiver system and methodology for generating, monitoring, and detecting changes in GNSS interferometric reflectometry signatures. Its primary function is defensive, aimed at enhancing security for GNSS signals used in positioning, navigation, and timing applications. The system monitors changes in GNSS interferometric reflectometry (GNSS-IR) signatures to detect potential signal spoofing or tampering. This solution employs a single antenna to receive both the direct and reflected GNSS signals and relies on an interference pattern generated by the interaction of these signals over time. By analyzing these patterns, the system can detect anomalies indicative of spoofing, leveraging the periodicity of GNSS satellite orbits (particularly GPS) to compare interference patterns over multiple orbits. This approach, however, relies on a predictable signal source with traditional interference patterns that require extended observation periods of the satellite's path requires extended observation, which limits flexibility.

US 11828715 B2 describes a soil moisture microwave remote sensing device with multi-mode compatibility via GNSS-R, designed specifically for soil humidity measurements. The device includes multiple antennas -both direct and reflected RHCP (Right-Hand Circularly Polarized) antennas, along with a reflective LHCP (Left-Hand Circularly Polarized) antenna-, switches, preamplifiers, and tracking modules that enable it to switch flexibly between different GNSS-R working modes for soil moisture detection. This configuration allows non-contact, large-area moisture sensing by processing GNSS reflected signals. Unlike typical GNSS-R systems, it uses a multi-mode approach to leverage GNSS signal variations, thus enhancing soil moisture accuracy over broad areas. Calibration is achieved by leveraging the interference effect between direct and reflected signals, which requires control over multiple components in the receiver chain to manage gain and phase delay for accurate readings. This system is optimized for GNSS signals with known properties, relying on both closed-loop and open-loop tracking modules to process the direct and reflected signals separately.

Therefore, it is highly desirable to provide a single-channel passive microwave reflectometry system and method capable of receiving both direct and reflected signals through the same receiver chain, without relying on complex multi-antenna setups or long observation periods and with the capability of using both GNSS signals and other sources of opportunity, including signals with unknown modulation schemes, to support a broader range of applications in surface property measurement.

### Summary of the invention

The present invention solves the aforementioned problems and overcomes previously explained state-of-art work limitations by providing a single-channel design for a method/apparatus that enables self-calibrated measurements by receiving both direct and reflected signals through a single receiver chain, ensuring identical signal treatment in terms of amplitude, phase, and group delay. The invention uses a 2:1 calibration switch to alternate between noise and antenna measurements, allowing it to perform internal self-calibration and eliminate errors due to gain and phase variations within the receiver. This invention includes a digital signal processing that cleans the spectral density and autocorrelation function of the measured signals, enhancing measurement precision. This approach is particularly useful for applications requiring accurate reflection coefficient measurements, as well as for signal analysis in scenarios where external signal sources may have unknown or variable properties.

The present invention consists of a single-channel apparatus and method for noise reduction, specially applied to perform self-calibrated measurement of reflection coefficient for electromagnetic signals, with which both direct and reflected signals are received. In this way both signals are affected equally by the receiver (amplitudes, phases and group and phase delays), and self-calibrated measurements can be obtained by making relative measurements. This solves the problem of amplitude calibration, and group and phase delay calibration for measuring reflection coefficients in passive microwave reflectometry.

An aspect of the present invention refers to a method for reducing noise in spectral estimations comprising:
- receiving an input signal at a single input signal port of a receiver,
- obtaining a calibration measurement and a signal acquisition measurement by using a calibration switch, which is connected to the input signal port to obtain the signal acquisition measurement and which is connected to a calibration load that generates an internal noise to obtain the calibration measurement;
- inputting the obtained calibration measurement and the signal acquisition measurement along a single signal path through a single receiver chain to a digital signal processor and generating an output which is based on a cleaned power spectral density of the signal acquisition measurement and the cleaned power spectral density is obtained by the digital signal processor performing the following steps:
   - calculating an autocorrelation function of the calibration measurement;
   - obtaining a power spectral density of the calibration measurement by applying the Fourier transform to the autocorrelation function of the calibration measurement;
   - calculating an autocorrelation function of the signal acquisition measurement;
   - obtaining a power spectral density of the signal acquisition measurement by applying the Fourier transform to the autocorrelation function of the signal acquisition measurement;
   - estimating a scale factor to align the power spectral densities of the calibration and signal acquisition measurements;
   - cleaning the power spectral density of the signal acquisition measurement to obtain the cleaned power spectral density of the signal acquisition measurement by subtracting the power spectral density of the noise measurement multiplied by the scaling factor from the power spectral density of the signal acquisition measurement.

Another aspect of the present invention refers to a single-channel apparatus implementing the method of noise reduction in spectral estimations described above, comprising the following components:
- a receiver with a single input signal port configured to receive an input signal comprising:
   - a calibration switch connected to i) the input signal port to obtain a signal acquisition measurement, and ii) a calibration load that generates an internal noise to obtain a calibration measurement;
      and
- a digital signal processor, DSP, configured to:
   receive as inputs, from a single receiver chain which is connected to the calibration switch, the obtained calibration measurement and the signal acquisition measurement digitized by an analog-to-digital converter of the receiver, and
   generate an output derived from a spectral estimation with reduced noise,
the DSP being further configured to:
- calculate an autocorrelation function of the calibration measurement,
- obtain a power spectral density of the calibration measurement by applying the Fourier transform to the autocorrelation function of the calibration measurement,
- calculate an autocorrelation function of the signal acquisition measurement,
- obtain a power spectral density of the signal acquisition measurement by applying the Fourier transform of the autocorrelation function of the signal acquisition measurement,
- estimate a scale factor used to align the power spectral densities of the calibration and signal acquisition measurements, and
- clean the power spectral density of the signal acquisition measurement, which comprises subtracting the power spectral density of the noise measurement multiplied by the scaling factor from the power spectral density of the signal acquisition measurement, to obtain a cleaned power spectral density of the signal acquisition measurement, wherein the DSP generates the output based on the cleaned power spectral density.

The invention is defined by the independent claims. The dependent claims define advantageous embodiments.

The present invention has a number of advantages with respect to prior art, which can be summarized as follows:
- The proposed apparatus/system diverges from the aforementioned systems disclosed in US2022/0350031A1 and US11828715B2 by employing an internal calibration method and auto-correlation waveform analysis at multiple lags, providing improved real-time reflectivity measurements without requiring extensive incidence angle variations. The internal calibration method of the proposed system directly compensates the receiver chain's properties, including amplitude, group and phase delay, without relying on external factors or long observation periods. By employing an auto-correlation waveform analysis at multiple lags, the proposed system captures additional information in real-time, allowing accurate reflectivity measurements without the need for varying incidence angles. This innovation enables reliable passive reflectometry even with non-GNSS signals, such as those from geostationary satellites, where the transmitted signal characteristics or modulation schemes may be unknown. Unlike the present invention, US2022/0350031A1 is designed specifically for GNSS signals and focuses on security rather than environmental measurements, relying on external calibration over time rather than an internal, real-time calibration system. In contrast to US11828715B2, the present invention achieves a simpler design by using a single receiver chain for both direct and reflected signals, making real-time calibration possible without needing multiple antennas or complex calibration schemes, thus enabling passive reflectometry with a broader range of non-GNSS signals as well.
- By performing spectral cleaning and autocorrelation through a unique digital signal processing algorithm, the invention supports a wide range of applications, from environmental monitoring via remote sensing to radioelectric spectrum management and security applications, where precise and reliable signal measurements are critical.

These and other advantages will be apparent in the light of the detailed description of the invention.

### Description of the drawings

For the purpose of aiding the understanding of the characteristics of the invention, according to a preferred practical embodiment thereof and in order to complement this description, the following Figures are attached as an integral part thereof, having an illustrative and non-limiting character:
Figure 1 shows a block diagram of a single channel apparatus for reducing noise in spectral estimations and self-calibrating measurement of reflection coefficients, according to a preferred embodiment.
Figure 2 shows a block diagram of a single channel reflectometer, according to a possible embodiment.
Figure 3 shows a block diagram including a receiver with an input 1:2 calibration switch and a signal processing unit for implementing the steps of spectrum cleaning and reflection coefficient estimation, according to a possible embodiment.
Figure 4 shows two graphics: the magnitude and phase of the autocorrelation function of a signal that has a direct and reflected signal component, attenuated by the reflection coefficient, for both a receiver with noise and for an ideal noiseless receiver.
Figure 5 shows a graphic illustrating the spectral density of the antenna measurement, the cleaned spectral density and the calibration noise.

### Preferred embodiment of the invention

Any particular architectural layout or implementation presented herein is provided for purposes of illustration and comprehension only and is not intended to limit aspects of the invention.

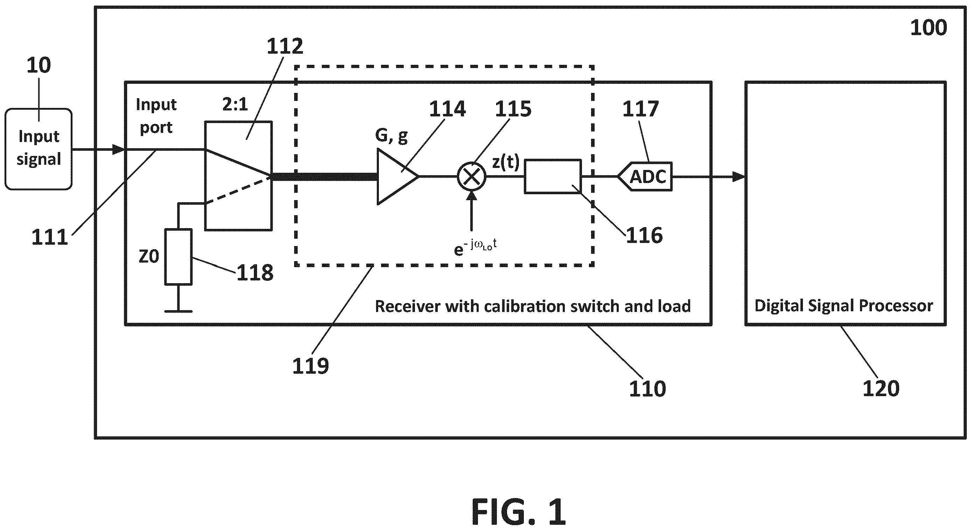

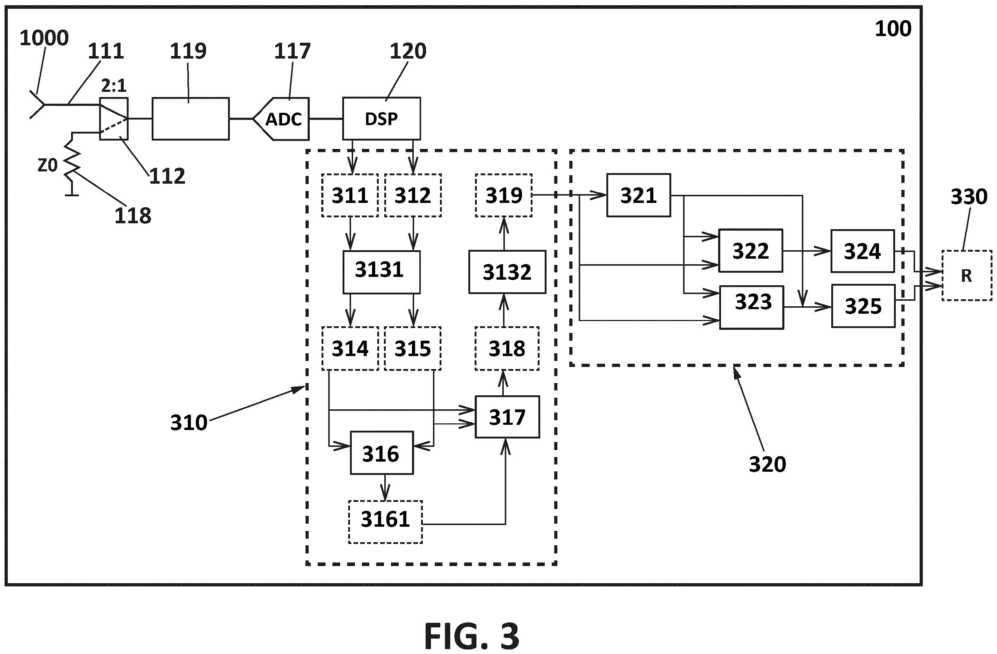

Figure 1 illustrates schematically a single-channel apparatus (100) comprising a receiver (110) equipped with a calibration switch and load for processing an input signal (10) which is directed through an input port (111) to a 2:1 calibration switch (112), which routes the input signal (10) either directly or selects a calibration load (118) of matched impedance Z₀, allowing the receiver (110) to alternate between a calibration measurement (i.e., the noise of the matched load) and a signal acquisition measurement (e.g., the actual antenna measurement). The calibration load (118), being a matched resistor or impedance Z₀ at ambient temperature and generating white Gaussian noise, is used for calibration. The calibration switch (112) isolates the non-used input so that either the input signal (10) or the calibration signal from the calibration load (118) enters the receiver (110). As known, the system response refers to the internal characteristics of the receiver (110) that affect the processing of input signals, including noise levels, gain, frequency response, and phase or group delays. This calibration load (118) and switch configuration allow compensation for gain and phase inconsistencies in the only one receiver chain (119). The input signal (10) contains both direct and reflected components of an external signal, which are processed together to ensure that both paths are affected equally within a single receiver chain (119). In the receiver chain (119), as in any real receiver, receiver noise is added to the signal. Next, the combined signal passes through an amplifier (114) with power gain G and amplitude gain *g,* $g = \sqrt{\left(G\right)}$*,* after which it is mixed with a reference oscillator (115) to down-convert the signal to an intermediate or baseband frequency for further processing. The down-converted signal z(t) is conditioned by a low-pass equivalent filter (116) and the filtered signal is then sampled by an analog-to-digital converter (117) or ADC. Note that the actual architecture of the receiver could differ from the one of Figure 1., for instance, by having one or more amplifiers and filters at RF, IF or baseband or several mixing stages. In any of these cases an equivalent architecture as the one in Figure 1. can be derived. Finally, the digitized signal is sent to a DSP or digital signal processor (120) which executes the signal processing algorithm, performing autocorrelation, Fourier transforms, spectral cleaning and further steps shown in Figure 3 for noise reduction and accurate measurement of the spectral density, relative power, or reflection coefficient.

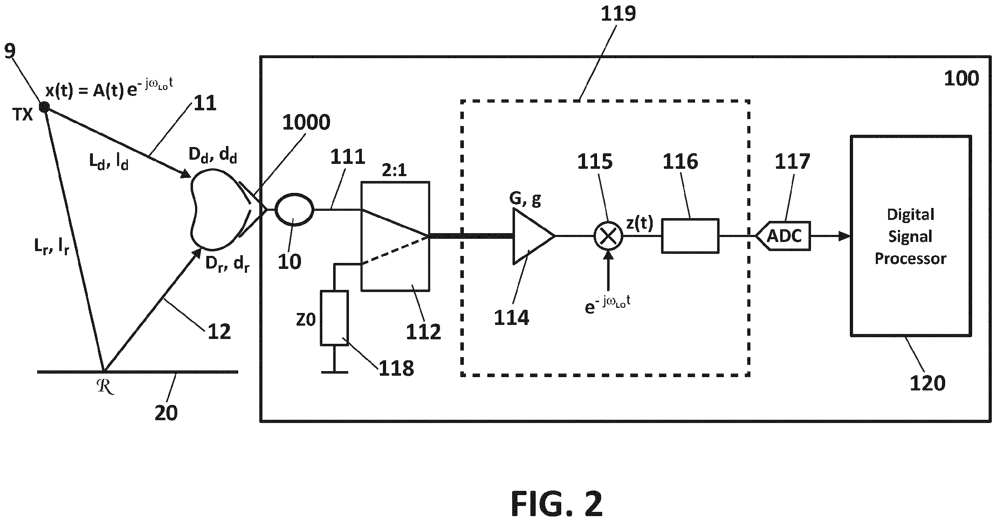

In a possible embodiment, shown in Figure 2, the single-channel apparatus (100) is a single-channel passive microwave reflectometry apparatus, at which both a direct signal (11) and a reflected signal (12) are received. The input signal (10) entering the receiver (110) through the single input port (111) is the sum of the direct signal (11) and the reflected signal (12) resulting from the interaction of the input signal (10) with a reflecting surface (20) and acquired by the antenna (1000). In this way, both direct (11) and reflected (12) signals, which are derived from the transmitted signal (9), are affected equally by the receiver (in terms of amplitudes, phases and group and phase delays), and self-calibrated measurements can be obtained by making relative measurements. This solves the problem of amplitude, group and phase delay calibration, for measuring reflection coefficients.

Figure 3 shows a block diagram that contains the receiver (100) with the input 1:2 calibration switch (112) and the signal processing algorithm running in the digital signal processor (120) that generates an output (e.g., in reflectometry applications, a reflection coefficient). The series of steps for cleaning the noise from the spectral density and autocorrelation function is shown in a first flow diagram (310), while the steps for estimating the reflection coefficient is shown in a second flow diagram (320).

The following steps serve to clean up a power spectrum, as shown in the first flow diagram (310) of Figure 3, and can be useful in a variety of applications that require making or using spectral estimates:
1. Perform the calibration measurement by selecting the calibration load (118) using the input switch (112).
2. Calculate (312) the autocorrelation function of the noise measurement.
3. Obtain (315) the power spectral density of the noise measurement from the Fourier transform (3131) of the autocorrelation of the calibration measurement.
4. Perform the signal acquisition measurement (e.g., antenna measurement). by selecting the input port (111) using the input switch (112). This step refers to any measurement process where an input signal is acquired for analysis, regardless of whether it originates from an antenna, a sensor, or another source. It distinguishes the measurement intended for signal analysis (e.g., antenna measurement, oscilloscope input) from the calibration measurement performed in step 1, which is specifically for system response characterization.
5. Calculate (311) the autocorrelation function of the signal acquisition measurement.
6. Obtain (314) the power spectral density of the signal acquisition measurement from the Fourier transform (3131) of the autocorrelation of the signal acquisition measurement.
7. Estimate (316) the scale factor λ. λ is a proportionality constant used to align the power spectral densities of the calibration and signal acquisition (noise and antenna) measurements. How to obtain an estimation for λ is explained further below. Once obtained (3161) the scale factor λ is applied to the step of cleaning the spectrum (317) as λ accounts for any differences in noise temperature, or other systematic factors between the calibration (noise) measurement and the signal acquisition (antenna) measurement.
8. Clean the spectrum (317) of the signal acquisition measurement, which comprises subtracting the estimated noise spectrum, i.e., the power spectral density of the noise measurement obtained (315) in the above-referred step 3, multiplied by the scaling factor λ, from the estimated signal spectrum, i.e., the power spectral density of the signal acquisition obtained (314) in step 2, to obtain the clean power spectral density (318) of the input signal.
9. Obtain the clean autocorrelation function (319) by calculating the inverse Fourier transform (3132) of the clean power spectral density of the signal acquisition measurement (318).

The output from the digital signal processor (120) is derived from a spectral estimation with reduced noise. In a possible embodiment, the output generated by the digital signal processor (120) is the cleaned power spectral density (318); i.e., the single-channel apparatus or receiver (100) is a device that calculates only the clean spectrum.

The following steps apply more specifically to another possible embodiment for reflectometry applications, as shown in the second flow diagram (320) of Figure 3, in order to obtain a reflection coefficient *R* as the output (330) delivered by the digital signal processor (120). The reflection coefficient *R* is a complex scalar parameter that describes how an incident wave is reflected by a surface or target, including both magnitude and phase information of the reflected signal; hence, *R is* representing both the amplitude (magnitude) and delay or shift (phase) of the reflected signal (12) due to a reflecting surface (20) as the one shown in Figure 2.
10. Estimate the position (321), magnitude and phase of the side/lateral peaks of the clean antenna autocorrelation function (319) obtained from the above-described process performed by the digital signal processor (120), as described further below.
11. Estimate the magnitude (324) of the reflection coefficient *R* from an amplitude quotient Q₁ (322).
12. Estimate the phase (325) of the reflection coefficient *R* from a complex quotient Q₂ (323).

All the aforementioned steps are described in detail below.

The notation used in the following equations and their description is:
Lowercase terms apply to amplitude values, while equivalent power terms are written in uppercase. For example, the relationship between terms is: ${L}_{d} = {l}_{d}^{2} , {L}_{r} = {l}_{r}^{2}$.

The subscripts represent the direct signal components, d, and the reflected signal components r, respectively.

IF stands for Intermediate Frequency. LO stands for local oscillator.

A transmitter transmits a signal *x*(*t*) that reaches the receiver by two different paths, the direct straight line path and the reflected path. The reflected signal (12) is reflected from a reflecting surface (20) under study and is affected by a complex reflection coefficient R. Both direct and reflected signals (11, 12) suffer propagation losses *l_{d}* and *lᵣ* respectively. Both direct and reflected signals (11, 12) are received by a single antenna (1000), whose pattern is known (e.g. measured in an anechoic chamber) in amplitude and phase for the directions of incidence of the direct and reflected signals (11, 12). The sum of both signals (11, 12) passes through the heterodyne receiving chain (119) with amplitude gain *g* and local oscillator frequency *f_{LO} =* $\frac{{ω}_{LO}}{2 π}$*, ω_{LO}* being the angular frequency of the local oscillator. The first element of the heterodyne receiving chain (119) is a switch (112) which allows to choose between the external signal provided by the antenna (1000) or an internal calibration signal, which consists of a white spectrum signal source. This white spectrum signal source can be implemented in a easy and compact way with the matched resistor Z₀ that is the calibration load (118). In the example, the calibration load (118) is a resistor matched to the characteristic impedance of the system Z₀. The power of this noise source is proportional to the physical temperature of the resistor. The use of a matched resistor Z₀ allows for simpler implementation, but an implementation using a synthetic signal that has a flat spectrum as the calibration signal is also possible.

The system noise is modeled as white, complex and additive noise *n_{RF}*(*t*)*,* which includes both antenna and receiver noise.

The direct and reflected signals (11, 12), at the antenna port, are respectively defined as: ${y}_{d} \left(t\right) = {l}_{d} ⋅ {d}_{d} ⋅ x \left(t-{τ}_{d}\right) = {l}_{d} ⋅ {d}_{d} ⋅ A \left(t-{τ}_{d}\right) {e}^{jωt} {e}^{- {jωτ}_{d}}$ ${y}_{r} \left(t\right) = {l}_{r} ⋅ R ⋅ {d}_{r} ⋅ x \left(t-{τ}_{r}\right) = {l}_{r} ⋅ R ⋅ {d}_{r} ⋅ A \left(t-{τ}_{r}\right) {e}^{jωt} {e}^{- {jωτ}_{r}}$ wherein R, A, and d_{d} and dᵣ are complex variables and:
y*_{d}(t)* denotes the received direct signal as a function of time *t.*
y*ᵣ(t)* denotes the received reflected signal as a function of time *t.*
*l_{d}* denotes the propagation loss factor for the direct signal path.
*lᵣ* denotes the propagation loss factor for the reflected signal path.

These losses *l_{d}* and *lᵣ* account for the signal attenuation due to distance or medium effects in each path. They are known parameters, either by external calibration or from geometric considerations.
d*_{d}* denotes a vector representing the directional characteristics (antenna directivity) at the direction of incidence of the direct signal.
d*ᵣ* denotes a vector representing the directional characteristics of the antenna at the direction of incidence of the reflected signal.

These parameters, representing the directional amplitude gain and phase of the antenna in the direction of the direct signal and the reflected signal respectively, are also known parameters, typically determined by the antenna design and/or characterization.
*R* denotes a reflection coefficient applied to the reflected signal, accounting for properties of the reflecting surface (20).
*x*(*t - τ_{d}*) The transmitted signal x delayed by *τ_{d}* representing the propagation delay of the direct signal (11).
*x*(*t - τᵣ*) The transmitted signal x delayed by *τᵣ* representing the propagation delay of the reflected signal (12).
*A*(*t - τ_{d}*) The envelope of the direct signal after delay *τ_{d}*
*A*(*t - τᵣ*) The envelope of the reflected signal after delay *τᵣ*
*e^{jωt}* representing the carrier frequency component of the signal at angular frequency *ω*
*e^{-jωτ_{d}}* A phase shift factor for the direct signal due to the propagation delay *τ_{d}*.
*e^{-jωτᵣ}* A phase shift factor for the reflected signal due to the propagation delay *τᵣ*
*τᵣ* The time delay associated with the direct signal path.
*τᵣ* The time delay associated with the reflected signal path.

The signal at intermediate frequency at the input of the analogue to digital converter is: $\begin{matrix}z \left(t\right) = \left[{y}_{d}\left(t\right)+{y}_{r}\left(t\right)+n\left(t\right)\right] ⋅ g ⋅ {e}^{- {jω}_{LO} t} = g ⋅ {l}_{d} ⋅ {d}_{d} ⋅ A \left(t-{τ}_{d}\right) ⋅ {e}^{jωt} ⋅ {e}^{- jωτ} \\ g ⋅ {l}_{r} R ⋅ {d}_{r} ⋅ A \left(t-{τ}_{r}\right) ⋅ {e}^{jωt} ⋅ {e}^{- {jωτ}_{r}} ⋅ {e}^{- {jω}_{LO} t} + ⋯ \\ g ⋅ {n}_{RF} \left(t\right) ⋅ {e}^{- {jω}_{LO} t}\end{matrix}$ wherein z(*t*) denotes the signal at the intermediate frequency, IF, at the input of the ADC (117) as a function of time *t*, g is a complex variable representing the gain of the receiver's RF chain and applied uniformly to all signal components, and *n_{RF}*(*t*) is the noise at the radio frequency stage, RF, affecting both direct and reflected signal paths. The angular frequency ω_{IF} represents the signal IF after downconversion to an intermediate stage within the receiver.

Since the receiver (110) has only one receiver chain (119), the autocorrelation function R_{zz} of the signal z(*t*) is calculated. R_{zz}(τ) is obtained for different values of τ, which quantifies the time shift or delay applied to the signal z(t) in the autocorrelation process. R_{zz}(τ) is defined as a sum of nine terms as follows: ${R}_{zz} \left(τ\right) = {\sum }_{k = 1}^{9} {I}_{k}$ wherein ${I}_{1} = {l}_{d}^{2} ⋅ {\left|{d}_{d}\right|}^{2} ⋅ {\left|g\right|}^{2} ⋅ {e}^{{jω}_{IF} τ} ⋅ {R}_{AA} \left(τ\right)$ ${I}_{2} = {l}_{r}^{2} ⋅ {\left|{d}_{r}\right|}^{2} ⋅ {\left|R\right|}^{2} {\left|g\right|}^{2} ⋅ {e}^{{jω}_{IF} τ} ⋅ {R}_{AA} \left(τ\right)$ ${I}_{3} = {\left|g\right|}^{2} ⋅ {e}^{{jω}_{IF} τ} ⋅ {R}_{nn} \left(τ\right)$ ${I}_{4} = {l}_{d} ⋅ {l}_{r} ⋅ {d}_{d} ⋅ {d}_{r}^{∗} ⋅ {R}^{∗} ⋅ {\left|g\right|}^{2} ⋅ {e}^{{jω}_{IF} τ} ⋅ {e}^{jωΔτ} ⋅ {R}_{AA} \left(τ+Δτ\right)$ ${I}_{5} = {l}_{d} ⋅ {d}_{d} ⋅ {\left|g\right|}^{2} ⋅ {e}^{{jω}_{IF} τ} ⋅ {e}^{{jωτ}_{d}} ⋅ \int A \left(t-{τ}_{d}\right) {n}^{∗} \left(t-τ\right) dt \approx 0$ ${I}_{6} = {l}_{d} ⋅ {l}_{r} ⋅ {d}_{d}^{∗} ⋅ {d}_{r} ⋅ R ⋅ {\left|g\right|}^{2} ⋅ {e}^{{jω}_{IF} τ} ⋅ {e}^{- jωΔτ} ⋅ {R}_{AA} \left(τ+Δτ\right)$ ${I}_{7} = {l}_{d} ⋅ {d}_{r} ⋅ R ⋅ {\left|g\right|}^{2} ⋅ {e}^{{jω}_{IF} τ} ⋅ {e}^{- {jωτ}_{r}} ⋅ \int A \left(t-{τ}_{r}\right) {n}^{∗} \left(t-τ\right) dt \approx 0$ ${I}_{8} = {l}_{d} ⋅ {d}_{d}^{∗} ⋅ {\left|g\right|}^{2} ⋅ {e}^{{jω}_{IF} τ} ⋅ {e}^{{jωτ}_{d}} ⋅ \int n \left(t\right) {A}^{∗} \left(t-{τ}_{d}-τ\right) dt \approx 0$ ${I}_{9} = {l}_{r} ⋅ {d}_{r}^{∗} ⋅ {R}^{∗} ⋅ {\left|g\right|}^{2} ⋅ {e}^{{jω}_{IF} τ} ⋅ {e}^{{jωτ}_{r}} ⋅ \int n \left(t\right) {A}^{∗} \left(t-{τ}_{r}-τ\right) dt \approx 0$

R_{AA}(τ) represents the autocorrelation function of the transmitted signal's amplitude envelope A(t). Δτ is the relative delay between the direct and reflected signals; i.e., the time difference between the arrival of the direct signal (11) and reflected signal (12) at the receiver (100). When the integration time is long enough, the *l₅, l₇, l₈* and *l₉* terms tend to zero, because the envelope of the signal A(t) and the noise n(t) are uncorrelated.

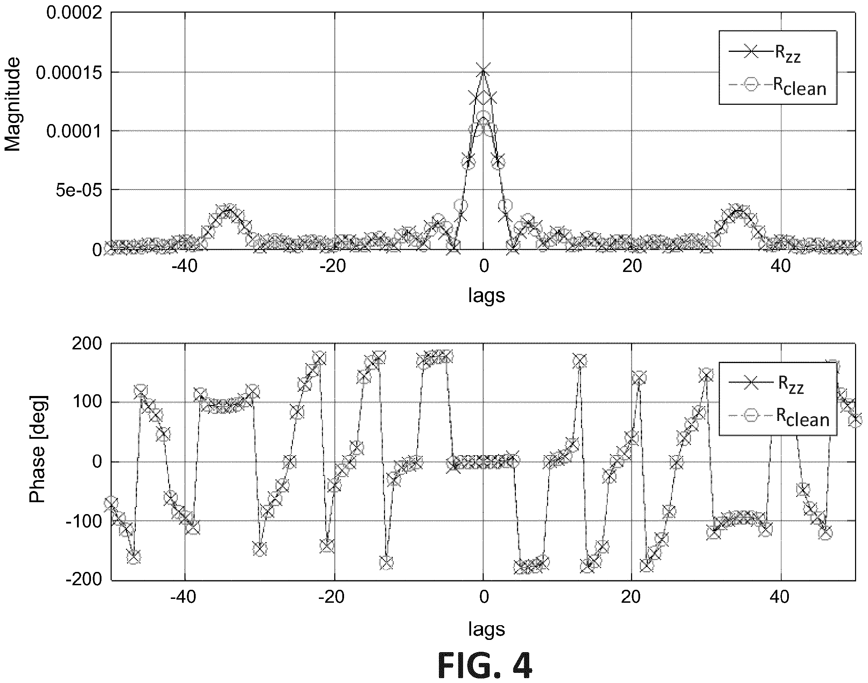

Figure 4 illustrates magnitude and phase of an autocorrelation function in an upper graphic and a lower graphic respectively. The graphics show examples of the autocorrelation function R_{zz} for a receiver with noise (graph drawn with a continuous line) and for an ideal noiseless receiver (graph drawn with a dashed line) which gives a clean autocorrelation function R_{clean}. The autocorrelation function R_{zz} has a central peak, which is the power sum of the direct signal, the reflected signal and the receiver noise. It also has two side peaks whose amplitude is proportional to the reflection coefficient of the surface and correspond to the cross-correlation between the direct and reflected signal.

For a receiver that had no noise, with a clean autocorrelation function R_{clean}, it is possible to obtain an estimate of the magnitude of the reflection coefficient from the amplitude of the central and lateral peaks. Two aspects are taken into account: the first is that the integration time to calculate the correlation function is long enough so that the cross-correlation terms between the noise and the signals *l₅, l₇, l₈* and *l₉* are approximately zero; the second is that the delay of the reflected signal is large enough so that the side lobe of the autocorrelation function can be separated from the central lobe. This is equivalent to considering that the signal bandwidth is large enough for the relative delay between direct and reflected signal to separate the main and side lobes of the autocorrelation function. In this case the value of the peaks is obtained as: ${R}_{zz} \left(0\right) = {\sum }_{k = 1}^{9} {I}_{k} \left(0\right) \approx {I}_{1} \left(0\right) + {I}_{2} \left(0\right)$ ${R}_{zz} \left(Δτ\right) = {\sum }_{k = 1}^{9} {I}_{k} \left(Δτ\right) \approx {I}_{6} \left(Δτ\right)$ ${R}_{zz} \left(-Δτ\right) = {\sum }_{k = 1}^{9} {I}_{k} \left(-Δτ\right) \approx {I}_{4} \left(-Δτ\right)$

The first step is to know exactly the value of the lateral peaks and their position on the horizontal axis. This is not known exactly, since the correlation function is not calculated continuously, but only for selected intervals; generally, the time intervals selected have a duration *T_{S}*, where *T_{S}* = 1/*F_{S}* is the inverse of the signal sampling frequency *F_{S}*,. To find the position and value of the peak, an interpolation is performed by using a parabolic fit to the position of the peak whose mathematical model is: $y = {Ax}^{2} + Bx + C$ where x corresponds to the horizontal axis of the autocorrelation function and *y* to its magnitude (in the vertical axis). To estimate the value and position of the maximum, the previous mathematical model is used for the three measurements (the one at the maximum and the two next to it) and so the three equations are posed in matrix form as follows: ${y}_{- 1} = {Ax}_{- 1}^{2} + {Bx}_{- 1} + C$ ${y}_{0} = {Ax}_{0}^{2} + {Bx}_{0} + C$ ${y}_{1} = {Ax}_{1}^{2} + {Bx}_{1} + C$ ${y}_{_} = {{M}_{_}}_{_} ⋅ \left(\begin{matrix}A \\ B \\ C\end{matrix}\right)$

By inverting the previous equation from the calculation of the pseudo-inverse matrix, it is possible to obtain the parameters *A, B* and *C* of the polynomial fit and, from them, the value of the maximum of the peak and its position *Δτ = xₘₐₓ,* equating the derivative of the polynomial to zero. The peak is defined by its coordinates in the horizontal axis and vertical axis respectively as: ${x}_{max} = \frac{- B}{2 A}$ ${y}_{max} = C - \frac{{B}^{2}}{4 A}$

Once the exact value of the lateral peaks and their position are known, the steps to be taken to estimate the magnitude of the reflection coefficient *R* follow. Firstly, the quotient between the magnitude of the right lateral peak and that of the central peak is taken to obtain: ${Q}_{1} = \frac{\left|{R}_{zz}\left(Δτ\right)\right|}{\left|{R}_{zz}\left(0\right)\right|} = \frac{{l}_{d} ⋅ {l}_{r} ⋅ \left|{d}_{d}\right| ⋅ \left|{d}_{r}\right| ⋅ \left|R\right| ⋅ \left|g\right| ⋅ {R}_{AA} \left(0\right)}{\left({l}_{d}^{2}⋅{\left|{d}_{d}\right|}^{2}+{l}_{r}^{2}⋅{\left|{d}_{r}\right|}^{2}⋅{\left|R\right|}^{2}\right) ⋅ {\left|g\right|}^{2} ⋅ {R}_{AA} \left(0\right)}$ where *Q₁* refers specifically to the quotient (322) used to estimate the magnitude (324) of reflection coefficient *R*, representing the ratio of amplitudes or power levels derived from the autocorrelation function cleaned by the single-channel apparatus (100). In this equation, it can be clearly seen how the receiver gain is cancelled, when the relative measurement is taken, as well as the value of the autocorrelation function at the origin. Even the autocorrelation function of the envelope R_{AA}(τ) is cancelled; a fact that provides robustness to the method, making it independent of power changes in the received signal. The amplitude quotient *Q₁* is reduced to a simple quadratic equation that is easy to solve: $a {\left|R\right|}^{2} + b \left|R\right| + c = 0$ where $a = {l}_{r}^{2} ⋅ {\left|{d}_{r}\right|}^{2} ⋅ {Q}_{1}$ $b = - {l}_{d} ⋅ {l}_{r} ⋅ \left|{d}_{d}\right| ⋅ \left|{d}_{r}\right|$ $c = {l}_{d}^{2} ⋅ {\left|{d}_{d}\right|}^{2} ⋅ {Q}_{1}$ and whose solution is $\left|R\right| = \frac{- b \pm \sqrt{{b}^{2} - 4 ac}}{2 a}$

Of the two possible solutions, only one of them is valid and makes physical sense, and it is the one that gives us a reflection coefficient between 0 and 1. In the case in which two solutions appear within this range, the one that has the most physical sense is chosen. For example, we will discard a solution with a value of 0.99 for material with low reflectivity.

To obtain an estimate of the phase (325) of the reflection coefficient R, the peak value of the two side lobes are used and the following quotient (323), the phase shift quotient *Q₂*, is calculated: ${Q}_{2} = \frac{\sqrt{{R}_{zz} \left(Δτ\right)}}{\sqrt{{R}_{zz} \left(-Δτ\right)}} = \frac{\sqrt{{I}_{6} \left(Δτ\right)}}{\sqrt{{I}_{4} \left(-Δτ\right)}} = \frac{\sqrt{{d}_{d}^{*} {d}_{r} {Re}^{- {jω}_{LO} Δτ}}}{\sqrt{{d}_{d} {d}_{r}^{*} {R}^{*} {e}^{- {jω}_{LO} Δτ}}} = {e}^{j \left[ρ+{δ}_{r}-{δ}_{d}+{ω}_{LO}Δτ\right]} = {e}^{jβ}$

In this case the same criterion as before used, assuming that the other terms *Iₖ* are zero, and that *δ_{d}* is the phase of the antenna pattern in the direction of the direct signal, *δᵣ* the phase of the antenna pattern in the direction of the reflected signal and *ρ* the phase of the reflection coefficient. The antenna pattern phases can be characterised by measuring the antenna in an anechoic chamber and these values do not change significantly over the life of the instrument, since it is a passive element. Finally, the phase *ρ* of the reflection coefficient *R* is obtained as: $ρ = β + {δ}_{d} - {δ}_{r} + {ω}_{LO} Δτ$

It is worth mentioning that in order to estimate the phase *ρ*, it is necessary to know precisely the relative delay *Δτ* between the direct and reflected signal, as described before: *Δτ = xₘₐₓ.*

The use of square roots in the aforementioned equation to calculate the phase shift quotient *Q₂* is necessary to eliminate an uncertainty in the estimated phase for angles greater than +90° and less than -90°. If cube or order *p* roots are used instead of square roots, the uncertainty in the obtained phase is also eliminated. However, in this case the noise in the resulting estimate is increased. For the roots of order *p* in equation of the *Q₂* calculation, the solution for the phase is $ρ = \frac{p}{2} β + {δ}_{d} - {δ}_{r} + {ω}_{LO} Δτ$

The roots of order *p*=2 are chosen, because this allows the elimination of the uncertainty in the phase for large values without increasing the noise of the estimate.

Therefore, it is possible to estimate the magnitude and phase of the reflection coefficient *R* from the measurement of the autocorrelation function of the received signal for an ideal receiving system without noise. Obviously this is not the case in reality due to noise, whether from the antenna, the receiver or both. A previous step to the computations shown above is needed to eliminate the effect of system noise from the autocorrelation function, as explained below.

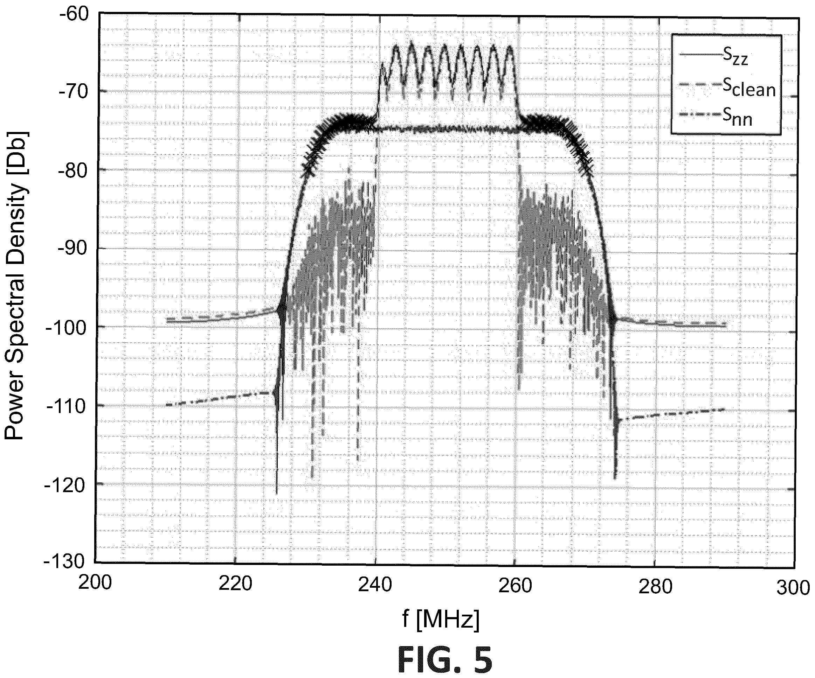

In order to perform the cleaning process of the autocorrelation function, as shown in the first flow diagram (310) of Figure 3, firstly, an additional measurement is carried out and for this purpose, the receiver input switch (112) is connected to a broad-spectrum noise source, e.g., by using a calibration load (118) matched to the characteristic impedance of the system or a synthetic calibration signal of flat spectrum. The white noise at the receiver input passes through the entire receiving chain (119) and is transferred to baseband (or intermediate band) in the same way as the antenna signal. The spectral density of the calibration noise can be estimated (315) by calculating its Fourier transform (3131). In the spectral density of the noise, the frequency response of the receiver is clearly shown. Also, the spectral density of the antenna measurement can be estimated (314) by calculating the Fourier transform (3131) of the autocorrelation of the antenna measurement. Both estimations, the spectral density of the antenna measurement S_{zz} (drawn in solid line) and the spectral density of the calibration measurement Sₙₙ (drawn in dash-dot line), are shown in Figure 5.

In a well-designed receiver, the frequency response of the electronics presents a somewhat wider bandwidth than the signal of interest to ensure that the signal of interest is fully received. Thus, it follows that there will be only noise components, but no signal components, at the outermost frequencies of the frequency response. This is shown in Figure 5 for the antenna measurement S_{zz}.

However, noise is present throughout the band, overlapping spectrally with the signal. Then, the next step is to clean the spectral density (317) of the antenna measurement, which comprises subtracting the noise spectrum, multiplied by a scaling factor *λ*, from the spectrum of the antenna measurement S_{zz}. To estimate the value of *λ*, the outermost components of the frequency response are used. Hence, those points are taken from both spectra to estimate *λ* with the following matrix equation: ${S}_{zz} \left({f}_{k}\right) = {S}_{nn} \left({f}_{k}\right) ⋅ λ$ where *S_{zz}*(*fₖ*) is a column vector containing the spectral density of the antenna measurement at the noise-only frequency selection, and the same for the spectral density of the calibration noise measurement *Sₙₙ*(*fₖ*)*. Sₙₙ*(*fₖ*) that is a column vector but can be treated as a rectangular matrix, and hence, inverting the equation with the pseudo-inverse gives an estimate for *λ*.

The clean spectral density of the antenna measurement is calculated (317) by means of: ${S}_{clean} \left(f\right) = {S}_{zz} \left(f\right) - λ ⋅ {S}_{nn} \left(f\right)$

**Figure** 5 **shows** the original power spectral density S_{zz}, the power spectral density of the calibration measurement Sₙₙ, and the above calculated cleaned power spectral density S_{clean} (drawn in dash-dot line), and the selected frequency points *fₖ* with black crosses for an example.. The example shows that the noise spectrum can be reduced by about 15 dB. This improvement factor depends on the integration time in the calculation of the correlation function. The longer the integration time, the greater the noise reduction.

The last step is to obtain (319) the clean autocorrelation function *R_{clean}*(τ) from the inverse Fourier transform (3132) of *S_{clean}*(*f*), shown in Figure 5. This function is the one used to estimate the reflection parameter R with the steps described before and shown in the second flow diagram (320) of Figure 3.

In particular, the proposed method has been developed for remote sensing with passive reflectometry to measure soil moisture from drones in precision agriculture, and so both processes, noise elimination and estimation of the reflection coefficient, are applied.

Another application is possible for remote sensing with reflectometry using narrowband signals. Using signals of opportunity with a narrower bandwidth can be advantageous in order to avoid/filter interferences or to use signals at a different wavelength which are of interest to study the reflecting surface. For the case where the bandwidth of the signals is narrow, the main and secondary lobes of the autocorrelation function will be broader and overlap. This could also be the case if the receiver is flying at low altitude over the reflecting surface. An approximate criterion to distinguish between both cases is given by *Δτ =* 2/*B,* where *Δτ* is the relative delay and *B* is the RF bandwidth of the signal. When *Δτ* between direct and reflected signals is smaller than 2/*B,* the lobes overlap. Otherwise, when the relative delay *Δτ* is larger than 2/*B,* the lobes do not overlap. Obviously, depending on the spectrum of the signal (flat over the whole band or not) the shapes of the lobes are different, and some overlapping occurs when *Δτ* and 2/*B* are similar. In the case of narrow band signals, the lobes overlap and the approximations of the aforementioned equations (14), (15) and (16), which are considered to compute *R_{zz}*(*τ*) when the bandwidth of the signals is broad, do not hold to compute *R_{zz}*(*τ*) when the bandwidth of the signals is narrow. Thus, another model has to be considered in order to compute equation (4). The cleaning of the auto-correlation waveform is performed in the same way (Z₀ calibration measurement, etc. and so, from equation (4), a cleaned version of the autocorrelation waveform is obtained. In order to carry out the retrievals to obtain the reflection coefficient R a forward model of the autocorrelation waveform that is identical to equation (4) is used, and its terms are given in equations (5)-(13). Considering that the term from equation (7) is zero, *l₃*=0, because the noise contribution has been cleaned, the input variables to the forward model that need to be estimated are:
- The complex reflection coefficient R: real and imaginary parts respectively representing the amplitude and phase shift of the reflected signal.
- The relative delay *Δτ* between direct and reflected signals, which is also estimated in order to avoid the need to have an additional measurement of the distance of the antenna to the reflecting surface.
- The autocorrelation of the signal envelope, *R_{AA}*(*τ*). Since the transmitted signal is uncontrolled, *R_{AA}*(τ) must also be estimated. The main lobes of autocorrelation functions around its main peak usually have a shape which is symmetrical respect to the origin and can be approximated by smooth functions using a sinc() function to approximate cross-correlation functions. Hence, for instance, a simpler second order polynomial model is used, defined as: ${R}_{AA} \left(τ\right) = - {Aτ}^{2} + C$ where *A* and *C* are the parameters that define the shape of the autocorrelation function near the main peak. *A* is the parameter in the polynomial model of the autocorrelation function that represents the curvature of the autocorrelation function around its peak and helps approximate the lobe shape of the autocorrelation function. *C* is the parameter representing the maximum value or peak of the autocorrelation of the signal envelope *R_{AA}*(*τ*) at *τ* = 0.
If this simple autocorrelation model is not sufficient to accurately represent the shape of the actual autocorrelation function, a more advanced parametrized model can be used. For example, a multiple-lobe sinc model (e.g., a two-lobe sinc model) with adjustable lobe width, amplitude and/or separation may be employed, or even more complex models if necessary.

Thus, the forward model is based on five parameters: real and imaginary part of the reflection coefficient *R, τ*, *A* and *C.* The remaining parameters that are needed in the forward models are known either by geometry or calibration: *l_{d}, lᵣ* (direct path and reflected path propagation losses), d_{d}, dᵣ (antenna directivities in the direct and reflected directions of arrival), ω_{IF} (angular frequency of the intermediate frequency of the receiver), and *g* (amplitude gain of the receiver). As the method takes relative measurements, the actual value for *g* is cancelled out in the retrieval, the amplitude gain of the receiver is set as *g*=1. Then, a numerical minimization process based on observations minus model is applied and then the objective function is minimized to obtain a solution for the best-fit values of the five input parameters, from which the reflection coefficient R is obtained as: ${F}_{cost} = {\left|O-M\left(real\left(R\right),imag\left(R\right),τ,A,C\right)\right|}^{2}$ where O is the observed data and M is the model output.

Further embodiments are described below for other possible applications which are:

### - LABORATORY INSTRUMENTATION:

- Spectrum estimation and detection of faint signals on digital oscilloscopes or high-end digital spectrum analyzers.
- Detection of interfering signals in EMC applications and EMC compliance. This links to the radio spectrum management section.

Laboratory instruments, such as a digital oscilloscope usually have a mathematical option that computes the Fast Fourier transform (FFT) of the acquired signal to shows its spectrum on the screen. The proposed method to obtain the cleaned spectral density function of the input signal can be implemented as an enhancement of this FFT feature by the digital oscilloscope. Because the method can reduce the contribution of the noise at all frequencies of the spectral density function a more sensitive laboratory instrument is obtained.

### - MILITARY and SECURITY APPLICATIONS

Spectrum estimation and detection of faint signals for the detection of electronic elements by sensing of radio signal transmitting sources; detection of radio beacon transmissions in avalanches, rescue of people, boats, planes, ...

Electronics plays a fundamental role in today's war. The detection of electronic devices can be carried out by sensing the signals they transmit, even if they are not intended parasitic transmissions at a very low level. A device that acquires the electromagnetic signals radiated by other electronic devices, and applies the method described above to estimate their cleaned spectral density function, is a more sensitive device than a standard spectrum analyzer, as the presence of noise is removed. This presents a clear advantage is detecting weaker transmissions, or transmissions that have their origin at a further distance.

### - RADIOASTRONOMY INSTRUMENTATION

Weak radioastronomy signals measured with radio telescopes carry information of distant stars, nebula and other astronomical objects. Some of this information is related to spectral emission lines of chemical compounds present in space, thus these radio telescopes measure the spectrum of the received signal. In order to improve the signal to noise ratio of the measured spectra, the spectrum cleaning method provides and advantage as it permits an increased SNR with the same radio telescope antenna size, or an equal SNR performance with a smaller radio telescope antenna.

### - RADIOELECTRIC SPECTRUM MANAGEMENT

Detection of illegal radio frequency transmissions in protected bands. This has direct application in radiometry and radio astronomy applications.

The management of radioelectric spectrum involves the periodic measurement of the radioelectric spectrum to detect and identify illegal emissions. A device that uses the method describe above to estimate the cleaned spectral density function of the signals acquired with an antenna results in a more sensitive device than a spectrum analyzer, allowing to detect signals that are close to the noise floor of the receiving system. This results advantageous as weaker emissions could be detected, as well as emissions that have their origin at a further distance, resulting in a smaller amount of sampling measurements and at less locations.

### - SCIENTIFIC INSTRUMENTATION

Similar to the application for oscilloscopes, the proposed process for noise reduction can be applied in interferometric measurements by scientific instrumentation (optical interferometry, spectrum measurements, etc.).

Therefore, the single-channel apparatus (100) shown in Figure 1, wherein the digital signal processor (120) is configured to perform the steps shown in Figure 3 to obtain the cleaned power spectral density (318), can be integrated into a digital oscilloscope or a high-end digital spectrum analyzer, wherein the digital signal processor (120) is configured to enhance the FFT of the acquired signal by using the obtained cleaned power spectral density (318). In alternative embodiments, the single-channel apparatus (100) can be incorporated in a device or system in which the output from the digital signal processor (120) is used in EMC testing and detection of interfering signals, detection of emergency radio beacon transmissions under high-noise conditions, radio spectrum management and illegal transmission detection, in scientific instrumentation or military and security applications.

## Claims

1. A single-channel apparatus (100) for reducing noise in spectral estimations, comprising:
- a receiver (110) with a single input signal port (111) configured to receive an input signal (10); and the receiver (110) further comprising:
- a calibration switch (112) connected to i) the input signal port (111) to obtain a signal acquisition measurement, and ii) a calibration load (118) generating an internal noise to obtain a calibration measurement;;
and
- a digital signal processor (120) configured to receive, as inputs, from a single receiver chain (119) connected to the calibration switch (112), the obtained calibration measurement and the signal acquisition measurement digitized by an analog-to-digital converter (117) of the receiver (110), and to generate an output derived from a spectral estimation with reduced noise, the digital signal processor (120) being further configured to:
- calculate (312) an autocorrelation function of the calibration measurement,
- obtain (315) a power spectral density of the calibration measurement by applying the Fourier transform (3131) to the autocorrelation function of the calibration measurement,
- calculate (311) an autocorrelation function of the signal acquisition measurement,
- obtain (314) a power spectral density of the signal acquisition measurement by applying the Fourier transform (3131) of the autocorrelation function of the signal acquisition measurement,
- estimate (316) a scale factor λ used to align the power spectral densities of the calibration and signal acquisition measurements,
- clean (317) the power spectral density of the signal acquisition measurement, which comprises subtracting the power spectral density of the noise measurement multiplied by the scaling factor from the power spectral density of the signal acquisition measurement, to obtain a cleaned power spectral density (318) of the signal acquisition measurement;
wherein the output generated by the digital signal processor (120) is based on the cleaned power spectral density (318).

2. The single-channel apparatus (100) according to claim 1, wherein the digital signal processor (120) is further configured to obtain a clean autocorrelation function (319) by calculating the inverse Fourier transform (3132) of the cleaned power spectral density (318) of the signal acquisition measurement, and to generate the output (330) by using the clean autocorrelation function (319).

3. The single-channel apparatus (100) according to claim 2, wherein the receiver (110) is a passive microwave reflectometer receiving the input signal (10) which is the addition of a direct signal (11) and a reflected signal (12), and the digital signal processor (120) is configured to generate the output (330) which is a complex scalar reflection coefficient, representing both the magnitude and phase of the reflected signal (12) resulting from the interaction of the input signal (10) with a reflecting surface (20), by estimating a position (321), magnitude and phase of a plurality of side peaks of the clean antenna autocorrelation function (319), and estimating the magnitude (324) of the reflection coefficient and the phase (325) of the reflection coefficient based on the estimated position (321), magnitude and phase of the plurality side peaks of the clean antenna autocorrelation function (319).

4. The single-channel apparatus (100) according to claim 3, wherein the digital signal processor (120) is configured to estimate the magnitude (324) of the reflection coefficient by computing: $\left|R\right| = \frac{- b \pm \sqrt{{b}^{2} - 4 ac}}{2 a}$ where $a = {l}_{r}^{2} ⋅ {\left|{d}_{r}\right|}^{2} ⋅ {Q}_{1}$ $b = - {l}_{d} ⋅ {l}_{r} ⋅ \left|{d}_{d}\right| ⋅ \left|{d}_{r}\right|$ $c = {l}_{d}^{2} ⋅ {\left|{d}_{d}\right|}^{2} ⋅ {Q}_{1}$ and where
R denotes the reflection coefficient and |*R*| denotes the magnitude of the reflection coefficient,
d*_{d}* denotes a vector representing a complex antenna voltage pattern at the direction of incidence of the direct signal (11),
d*ᵣ* denotes a vector representing a complex antenna voltage pattern at the direction of incidence of the reflected signal (12),
*l_{d}* denotes the propagation loss factor for the direct signal (11) and *lᵣ* denotes the propagation loss factor for the reflected signal (12),
and an amplitude quotient Q₁ calculated as: ${Q}_{1} = \frac{\left|{R}_{zz}\left(Δτ\right)\right|}{\left|{R}_{zz}\left(0\right)\right|} = \frac{{l}_{d} ⋅ {l}_{r} ⋅ \left|{d}_{d}\right| ⋅ \left|{d}_{r}\right| ⋅ \left|R\right| ⋅ \left|g\right| ⋅ {R}_{AA} \left(0\right)}{\left({l}_{d}^{2}⋅{\left|{d}_{d}\right|}^{2}+{l}_{r}^{2}⋅{\left|{d}_{r}\right|}^{2}⋅{\left|R\right|}^{2}\right) ⋅ {\left|g\right|}^{2} ⋅ {R}_{AA} \left(0\right)}$
where g denotes amplitude gain provided in the receiver (110) by an amplifier (114), R_{AA} denotes the autocorrelation of the signal envelope, R_{ZZ} denotes the autocorrelation of the signal at an intermediate frequency and Δτ is a relative delay between the direct signal (11) and the reflected signal (12).

5. The single-channel apparatus (100) according to any of claims3 or 4, wherein the digital signal processor (120) is configured to estimate the phase (325) of the reflection coefficient by computing: $ρ = β + {δ}_{d} - {δ}_{r} + {ω}_{LO} Δτ$
where ρ denotes the phase of the reflection coefficient *R*, δ_{d} is the phase of the antenna pattern in the direction of the direct signal, δr is the phase of the antenna pattern in the direction of the reflected signal, ω_{LO} is the angular frequency of the local oscillator and Δτ is the relative delay between the direct signal and the reflected signal, and β is the phase obtained from a complex quotient Q₂ which is defined as: ${Q}_{2} = \frac{\sqrt{{R}_{zz} \left(Δτ\right)}}{{R}_{zz} \left(-Δτ\right)} = \frac{\sqrt{{I}_{6} \left(Δτ\right)}}{\sqrt{{I}_{4} \left(-Δτ\right)}} = \frac{\sqrt{{d}_{d}^{∗} {d}_{r} {Re}^{- {jω}_{LO} Δτ}}}{\sqrt{{d}_{d} {d}_{r}^{∗} {R}^{∗} {e}^{- {jω}_{LO} Δτ}}} = {e}^{j \left[ρ+{δ}_{r}-{δ}_{d}+{ω}_{LO}Δτ\right]} = {e}^{jβ}$
where R_{zz} is the autocorrelation of the signal at an intermediate frequency.

6. The single-channel apparatus (100) according to any of claims 3-5, wherein the digital signal processor (120) is further configured to minimize an objective function, the objective function being defined as the squared difference between observed autocorrelation data and a forward model defined by at least i) the real and imaginary parts of the reflection coefficient *R*, ii) the propagation delay *τ* between the direct signal and the reflected signal, iii) the amplitude *A* of the autocorrelation function, and iv) a constant *C*;
and wherein the digital signal processor (120) is configured to estimate the reflection coefficient *R* by solving the minimization problem of the objective function: ${F}_{cost} = {\left|O-M\left(real\left(R\right),imag\left(R\right),τ,A,C\right)\right|}^{2}$
where *O* denotes the observed data and M denotes the output of the forward model.

7. The single-channel apparatus (100) according to any preceding claim, wherein the digital signal processor (120) is configured to use a parametrized model of the clean autocorrelation function (319), the parametrized model including a multiple-lobe sinc function with adjustable lobe width, amplitude and separation.

8. A method for reducing noise in spectral estimations, comprising:
- receiving an input signal (10) at a single input signal port (111) of a receiver (110);
- obtaining a calibration measurement and a signal acquisition measurement by using a calibration switch (112) connected to i) the input signal port to obtain the signal acquisition measurement and ii) a calibration load generating an internal noise to obtain the calibration measurement;
- inputting the obtained calibration measurement and the signal acquisition measurement along a single signal path through a single receiver chain (119) to a digital signal processor (120) and generating an output which is based on a cleaned power spectral density (318) of the signal acquisition measurement, wherein the cleaned power spectral density (318) is obtained by the digital signal processor (120) performing the following steps:
- calculating (312) an autocorrelation function of the calibration measurement;
- obtaining (315) a power spectral density of the calibration measurement by applying the Fourier transform (3131) to the autocorrelation function of the calibration measurement;
- calculating (311) an autocorrelation function of the signal acquisition measurement;
- obtaining (314) a power spectral density of the signal acquisition measurement by applying the Fourier transform (3131) to the autocorrelation function of the signal acquisition measurement;
- estimating (316) a scale factor to align the power spectral densities of the calibration and signal acquisition measurements;
- cleaning (317) the power spectral density of the signal acquisition measurement to obtain the cleaned power spectral density (318) of the signal acquisition measurement by subtracting the power spectral density of the noise measurement multiplied by the scaling factor from the power spectral density of the signal acquisition measurement.

9. The method according to claim 8, further comprising obtaining a clean autocorrelation function (319) by calculating the inverse Fourier transform (3132) of the cleaned power spectral density (318) of the signal acquisition measurement, wherein the output (330) generated by the digital signal processor (120) is based on the clean autocorrelation function (319).

10. The method according to claim 9, wherein the input signal (10), received at the receiver (110) which is a passive microwave reflectometer, is the addition of a direct signal (11) and a reflected signal (12), and the output (330) generated by the digital signal processor (120) is a scalar complex reflection coefficient, representing both the magnitude and phase of the reflected signal (12) resulting from the interaction of the input signal (10) with a reflecting surface (20), and wherein generating the output (330) comprises: estimating a position (321), magnitude and phase of a plurality of side peaks of the clean antenna autocorrelation function (319), and estimating the magnitude (324) of the reflection coefficient and the phase (325) of the reflection coefficient based on the estimated position (321), magnitude and phase of the plurality side peaks of the clean antenna autocorrelation function (319).

11. The method according to claim 10, wherein estimating the magnitude (324) of the reflection coefficient comprises computing: $\left|R\right| = \frac{- b \pm \sqrt{{b}^{2} - 4 ac}}{2 a}$ where $a = {l}_{r}^{2} ⋅ {\left|{d}_{r}\right|}^{2} ⋅ {Q}_{1}$ $b = - {l}_{d} ⋅ {l}_{r} ⋅ \left|{d}_{d}\right| ⋅ \left|{d}_{r}\right|$ $c = {l}_{d}^{2} ⋅ {\left|{d}_{d}\right|}^{2} ⋅ {Q}_{1}$ and where
R denotes the reflection coefficient and |*R*| denotes the magnitude of the reflection coefficient,
d*_{d}* denotes a vector representing a complex antenna voltage pattern at the direction of incidence of the direct signal (11),
d*ᵣ* denotes a vector representing a complex antenna voltage pattern at the direction of incidence of the reflected signal (12),
*l_{d}* denotes the propagation loss factor for the direct signal (11) and *lᵣ* denotes the propagation loss factor for the reflected signal (12),
and an amplitude quotient Q₁ calculated as: ${Q}_{1} = \frac{\left|{R}_{zz}\left(Δτ\right)\right|}{\left|{R}_{zz}\left(0\right)\right|} = \frac{{l}_{d} ⋅ {l}_{r} ⋅ \left|{d}_{d}\right| ⋅ \left|{d}_{r}\right| ⋅ \left|R\right| ⋅ \left|g\right| ⋅ {R}_{AA} \left(0\right)}{\left({l}_{d}^{2}⋅{\left|{d}_{d}\right|}^{2}+{l}_{r}^{2}⋅{\left|{d}_{r}\right|}^{2}⋅{\left|R\right|}^{2}\right) ⋅ {\left|g\right|}^{2} ⋅ {R}_{AA} \left(0\right)}$
where g denotes amplitude gain provided in the receiver (110) by an amplifier (114), R_{AA} denotes the autocorrelation of the signal envelope, R_{ZZ} denotes the autocorrelation of the signal at an intermediate frequency and *Δτ* is a relative delay between the direct signal (11) and the reflected signal (12).

12. The method according to any of claims 10 or 11, wherein estimating the phase (325) of the reflection coefficient comprises computing: $ρ = β + {δ}_{d} - {δ}_{r} + {ω}_{LO} Δτ$
where ρ denotes the phase of the reflection coefficient *R*, δ_{d} is the phase of the antenna pattern in the direction of the direct signal, δr is the phase of the antenna pattern in the direction of the reflected signal, ω_{LO} is the angular frequency of the local oscillator and *Δτ* is the relative delay between the direct signal and the reflected signal, and β is the phase obtained from a complex quotient Q₂ which is defined as: ${Q}_{2} = \frac{\sqrt{{R}_{zz} \left(Δτ\right)}}{\sqrt{{R}_{zz} \left(-Δτ\right)}} = \frac{\sqrt{{I}_{6} \left(Δτ\right)}}{\sqrt{{I}_{4} \left(-Δτ\right)}} = \frac{\sqrt{{d}_{d}^{*} {d}_{r} {Re}^{- {jω}_{LO} Δτ}}}{\sqrt{{d}_{d} {d}_{r}^{*} {R}^{*} {e}^{- {jω}_{LO} Δτ}}} = {e}^{j \left[ρ+{δ}_{r}-{δ}_{d}+{ω}_{LO}Δτ\right]} = {e}^{jβ}$
where R_{zz} is the autocorrelation of the signal at an intermediate frequency.

13. The method according to any of claims 10-12, further comprising minimizing an objective function, the objective function being defined as the squared difference between observed spectral data and a forward model defined by at least i) the real and imaginary parts of the reflection coefficient R, ii) the propagation delay *τ* between the direct signal and the reflected signal, iii) the amplitude A of the reflected signal, and iv) a correction factor *C*;
and wherein the reflection coefficient *R* is estimated by solving the minimization problem of the objective function: ${F}_{cost} = {\left|O-M\left(read\left(R\right),imag\left(R\right),τ,A,C\right)\right|}^{2}$
where *O* denotes the observed data and *M* denotes the output of the forward model.

14. The method according to any of claims 8-13, further comprising using a parametrized model of the clean autocorrelation function (319), the parametrized model including a multiple-lobe sinc function with adjustable lobe width, amplitude and separation.
